(19) Europäisches Patentamt / European Patent Office / Office européen des brevets

(11) **EP 4 323 747 B1**

(12) **EUROPÄISCHE PATENTSCHRIFT**

(45) Veröffentlichungstag und Bekanntmachung des Hinweises auf die Patenterteilung:
**19.02.2025 Patentblatt 2025/08**

(21) Anmeldenummer: **22717373.9**

(22) Anmeldetag: **21.03.2022**

(51) Internationale Patentklassifikation (IPC):
**G01N 9/00** (2006.01)    **G01N 11/16** (2006.01)
**G01F 1/84** (2006.01)

(52) Gemeinsame Patentklassifikation (CPC):
**G01N 9/002; G01N 11/16;** G01F 1/8477;
G01N 2009/006

(86) Internationale Anmeldenummer:
**PCT/EP2022/057319**

(87) Internationale Veröffentlichungsnummer:
**WO 2022/218648 (20.10.2022 Gazette 2022/42)**

(54) **DICHTEMESSGERÄT MIT MINDESTENS EINEM MESSROHR SOWIE VERFAHREN ZUM BETREIBEN UND VERFAHREN ZUM JUSTIEREN EINES SOLCHEN DICHTEMESSGERÄTES**

DENSITY MEASURING DEVICE WITH AT LEAST ONE MEASURING TUBE AS WELL AS METHOD FOR OPERATING AND METHOD FOR ADJUSTING SUCH A DENSITY MEASURING DEVICE

APPAREIL DE MESURE DE DENSITÉ AVEC AU MOINS UN TUBE DE MESURE AINSI QUE PROCÉDÉ DE FONCTIONNEMENT ET PROCÉDÉ D'AJUSTAGE D'UN TEL APPAREIL DE MESURE DE DENSITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2021 DE 102021109411**

(43) Veröffentlichungstag der Anmeldung:
**21.02.2024 Patentblatt 2024/08**

(73) Patentinhaber: **Endress+Hauser Flowtec AG**
**4153 Reinach (CH)**

(72) Erfinder:
• ZHU, Hao
  85354 Freising (DE)
• RIEDER, Alfred
  84032 Landshut (DE)

(74) Vertreter: **Hahn, Christian**
**Endress+Hauser Group Services (Deutschland)AG +Co. KG**
**Colmarer Straße 6**
**79576 Weil am Rhein (DE)**

(56) Entgegenhaltungen:
**WO-A1-2016/096243      WO-A1-2019/120780**
**WO-A1-2020/239319**

**Beschreibung**

Die vorliegende Erfindung betrifft ein Dichtemessgerät mit mindestens einem Messrohr sowie ein Verfahren zum Betreiben und ein Verfahren zum Justieren eines solchen Dichtemessgerätes, wobei das Dichtemessgerät zum Bestimmen eines Dichtemesswerts eines in dem mindestens einen Messrohr geführten Mediums, insbesondere einer Flüssigkeit dient. Derartige Dichtemessgeräte weisen unter Idealbedingungen mit einem homogenen, einphasigen Medium und einem Messrohr im Originalzustand eine hervorragende Messgenauigkeit auf. Andererseits können Abweichungen von diesen Idealbedingungen, wie ein mehrphasiges Medium, Belagsbildung, oder Materialabtrag des Messrohrs durch Abrasion bzw. Korrosion die Messgenauigkeit beeinträchtigen. Dieser Umstand ist an sich bekannt, und für jede einzelne dieser Abweichungen sind Modelle bekannt, um die mit ihnen assoziierten Messfehler zu korrigieren, oder zumindest zu warnen, dass die Messgenauigkeit beeinträchtigt ist.

Zum Kompensieren des Einflusses des so genannten Resonatoreffekts bei der Dichtemessung von Medien, die eine mit Gas beladenen Flüssigkeiten umfassen, kann beispielsweise die Multifrequenztechnologie eingesetzt werden. Dabei werden insbesondere die erste symmetrische Biegeschwingungsmode, die sogenannte $f_1$-Mode, und die zweite symmetrische Biegeschwingungsmode, die sogenannte $f_3$-Mode angeregt, um auf Basis der beiden zugehörigen Eigenfrequenzen, die Schallgeschwindigkeit des Mediums und einen bezüglich des Einflusses der Gasbeladung korrigierten Dichtemesswert zu bestimmen, wie in DE 10 2015 122 661 A1 beschrieben ist. Falls die $f_3$-Mode aufgrund einer zu großen Nähe der Resonanzfrequenz des Mediums zur Eigenfrequenz der $f_3$-Mode nicht mehr angeregt werden kann, kann auf die erste antisymmetrische Schwingungsmode ($f_2$-Mode) ausgewichen werden, deren Eigenfrequenz zwischen den Eigenfrequenzen der $f_1$-Mode und der $f_3$-Mode liegt. Eine hierfür vorteilhafte Gestaltung eines Schwingungserregers ist in der noch unveröffentlichten Anmeldung DE 10 2020 129 999.8 beschrieben.

Zur Detektion eines Belags kann beispielsweise die Dämpfung einer Schwingungsmode ausgewertet werden, wie in DE 10 2018 101 923 A1 beschrieben ist, wobei dies nur dann zuverlässig funktioniert, wenn eine Gasbeladung eines flüssigen Mediums ausgeschlossen werden kann. Sobald eine Gasbeladung gegeben ist, kann mit dem dort beschriebenen Verfahren eine Differenzierung zwischen Gasbeladung und Belag nicht mehr zuverlässig erfolgen.

Durch Überwachung der Schwingungsamplitude der Biegeschwingungsgrundmode ($f_1$-Mode) außer Resonanz kann eine Veränderung einer modalen Biegesteifigkeit bestimmt werden, womit die Auswirkung von Abrasion oder Korrosion festzustellen ist, wie beispielsweise in der noch unveröffentlichten Anmeldung DE 10 2019 124 709.8 und in der WO 2012 / 062 551 A1 beschrieben ist. Diese Vorgehensweise ist jedoch sehr aufwendig, da Amplituden außer Resonanz nur sehr schwierig zu messen sind. Weiterhin weist die Amplitudenmessung Querempfindlichkeiten zu Einflussfaktoren in der Messstrecke auf, die nichts mit der modalen Biegesteifigkeit zu tun haben.

Die noch unveröffentlichte Anmeldung DE 10 2020 111 127.4 beschreibt ein Verfahren, wie ein Kalibrierfaktor calf, der von einer modalen Biegesteifigkeit der $f_2$-Mode abhängt, anhand einer Überwachung dieser Biegesteifigkeit mittels Amplitudenmessung aktualisiert werden kann, und wie anhand einer Beziehung zwischen Veränderungen des Kalibrierfaktors und der modalen Biegesteifigkeit der $f_1$-Mode eine Klassifizierung von Schädigungen des Messrohrs erfolgen kann. Wie zuvor erwähnt, ist jedoch die Aussagekraft der Amplitudenmessung durch Querempfindlichkeiten zu anderen Einflussfaktoren in der Messstrecke begrenzt.

WO2020/239319 beschreibt ein Meßsystem zum Messen wenigstens einer Meßgröße, beispielsweise nämlich eines Strömungsparameters, wie einem Massenstrom oder einer Volumenstrom, oder eines Stoffparameters, wie einer Dichte oder einer Viskosität, eines strömenden Fluids.

Der diskutierte Stand der Technik leistet gute Beiträge zum Betrieb von Coriolis-Massedurchflussgeräten bzw. deren Betrieb als Dichtemessgerät. Es werden jedoch im Wesentlichen Teilaspekte unter der Annahme bestimmter Medieneigenschaften adressiert. Es ist die Aufgabe der vorliegenden Erfindung ein robusteres Verfahren zum Betreiben eines Dichtemessers anzugeben.

Die Aufgabe wird erfindungsgemäß gelöst durch das Verfahren gemäß Anspruch 1 zum Betreiben eines Dichtemessgeräts, das Verfahren gemäß Anspruch 13 zum Justieren eines Dichtemessgeräts und das Dichtmessgerät gemäß Anspruch 14.

Das erfindungsgemäße Verfahren dient zum Betreiben eines Dichtemessgerätes, welches mindestens ein schwingfähiges Messrohr zum Führen eines Mediums und einen an dem Messrohr angeordneten Erreger zum Anregen von Schwingungsmoden des mindesten einen Messrohrs, mindestens einen Schwingungssensor und einen Trägerkörper umfasst, wobei das Messrohr einlaufseitige und auslaufseitige Endabschnitte aufweist, die mit dem Trägerkörper verbunden sind, wobei das Verfahren die folgenden Schritte aufweist:

Anregen mindestens dreier Schwingungsmoden des Messrohrs;

Ermitteln von Eigenfrequenzmesswerten der mindestens drei Schwingungsmoden;

Ermitteln eines Dichtemesswerts des Mediums unter Berücksichtigung einer ggf. vorhandenen Gasbeladung; und Ermitteln einer charakteristischen Eigenschaft des mindestens Messrohrs auf Basis der Eigenfrequenzen der drei Schwingungsmoden.

In einer Weiterbildung der Erfindung umfasst die charakteristische Eigenschaft des Messrohrs einen effektive Wandstärkewert bzw. einen effektiven Materialabtragswert des Messrohrs oder einen effektiven Massebelagswert für einen Massebelag an der Wand des Messrohrs.

In einer Weiterbildung der Erfindung umfasst der effektive Massebelagswert einen Belagsstärkewert, der in Abhängigkeit eines Dichtewerts ($\rho_B$) für ein Material des Massebelags ermittelt wird.

In einer Weiterbildung der Erfindung umfasst das Verfahren weiterhin das Erfassen mindestens eines Parametermesswerts, von mindestens einem Parameter, zu dem mindestens eine der Eigenfrequenzen eine Querempfindlichkeit aufweist.

In einer Weiterbildung der Erfindung ist der mindestens eine Parameter ausgewählt aus einer Liste, welche eine Temperatur des mindestens einen Messrohrs, eine Temperatur eines Trägerköpers, und einen Druck des in dem Messrohr geführten Mediums umfasst.

Der Trägerkörper kann einen, insbesondere metallischen Körper umfassen, von dem das mindestens eine Messrohr in einem einlassseitigen Abschnitt und einem auslassseitigen Abschnitt gehalten wird, insbesondere um Relativbewegungen zwischen den Endabschnitten des Messrohrs zu unterdrücken bzw. zu minimieren.

In einer Weiterbildung der Erfindung sind die mindestens drei Schwingungsmoden ausgewählt aus einer Liste, welche die erste symmetrische Schwingungsmode ($f_1$-Mode), die erste antisymmetrische Schwingungsmode ($f_2$-Mode), die zweite symmetrische Schwingungsmode ($f_3$-Mode), die zweite antisymmetrische Schwingungsmode ($f_4$-Mode), die dritte symmetrische Schwingungsmode ($f_5$-Mode), und die dritte antisymmetrische Schwingungsmode ($f_6$-Mode) umfasst. Derzeit ist es bevorzugt, die Moden mit den geringsten modalen Biegesteifigkeiten auszuwählen. Dies sind in den meisten Fällen die $f_1$-Mode, die $f_2$-Mode und die $f_3$-Mode.

In einer Weiterbildung der Erfindung erfolgt das Anregen der Biegeschwingungsmoden durch Scannen geeigneter Frequenzbereiche und Regeln auf eine definierte Phasenbeziehung zwischen der Schwingungsamplitude und dem Erregersignal. Der Erreger kann insbesondere ein bis auf Fertigungstoleranzen symmetrisch angeordneter Erreger sein, mit welchem sich sämtliche symmetrische Biegeschwingungsmoden effizient anregen lassen. Die antisymmetrischen Schwingungsmoden lassen sich damit jedoch bei homogenen Medien im Messrohr nicht verlässlich anregen. Wenn jedoch ein Medium im Messrohr geführt ist, welches Inhomogenitäten aufweist, beispielsweise aufgrund einer Gasbeladung oder einer Feststoffphase, so ist kann ein Symmetriebruch in der Massenverteilung auftreten, so dass auch eine Anregung der antisymmetrischen Moden, insbesondere der $f_2$-Mode möglich ist. Die Anregung der Biegeschwingungsmoden kann auch mit einem leicht exzentrisch angeordneten Erreger erfolgen, wie beispielsweise in den noch unveröffentlichten Patentanmeldungen mit den Aktenzeichen DE 10 2020 111 127.4 und DE 10 2020 123 999.8 beschrieben ist. Weiterhin besteht die Möglichkeit, elektrodynamische Schwingungssensoren, welche bezüglich der Messrohrmitte in Längsrichtung des Messrohrs symmetrisch zueinander angeordnet sind, mit einem antisymmetrischen Erregersignal zu beaufschlagen, um auf diese Weise die antisymmetrischen Moden anzuregen.

In einer Weiterbildung der Erfindung umfasst das Verfahren das Lösen eines Gleichungssystems mindestens dreier Gleichungen des Typs:

$$\rho_M = K(c, f_n)[A_n + B'_n(f_n)] \qquad \text{(I)},$$

wobei

$\rho_M$ die Mediendichte ist,

K eine Korrekturfunktion für den Resonatoreffekt beschreibt, und

c die Schallgeschwindigkeit des im Rohr geführten Mediums ist.

Der Resonatoreffekt bezeichnet die Wirkung einer erzwungenen Schwingung des Mediums gegen das Messrohr, wodurch die beobachtete Eigenfrequenz $f_n$ einer Biegeschwingungsmode des Messrohrs verschoben wird. Die Stärke des Resonatoreffekts hängt insbesondere vom Verhältnis der betrachteten Eigenfrequenz des Messrohrs und der Resonanzfrequenz des Mediums ab, wobei letztere proportional zur Schallgeschwindigkeit des Mediums ist, welche mit zunehmender Gasbeladung des Mediums abnimmt. Die Resonanzfrequenz des Mediums ist meistens um ein Vielfaches größer als die beobachtete Eigenfrequenz des Messrohrs. In diesem Fall ist die Eigenfrequenz kleiner, als sie ohne den Resonatoreffekt wäre. Ohne Korrektur des Resonatoreffekts, würde ein zu großer Dichtemesswert ausgegeben. In diesen Fällen gilt gemäß einer Weiterbildung der Erfindung für die Korrekturfunktion K für den Resonatoreffekt $K \leq 1$, wobei

der Wert 1 mit steigender Schallgeschwindigkeit des Mediums angenähert wird. Die Korrekturfunktion K geht gegen Null, wenn die Resonanzfrequenz des Mediums gegen die Eigenfrequenz der betrachteten Schwingungsmode geht. In diesem Fall ist jedoch eine Anregung der Schwingungsmode nicht möglich.

In Gleichung I ist $A_n$ eine modenspezifische Funktion, die von einer charakteristischen Eigenschaft des Messrohrs abhängt, und die von der jeweiligen Eigenfrequenz einer Biegeschwingungsmode unabhängig ist, Weiterhin ist in Gleichung I $B'_n$ eine modenspezifische Funktion, die von der mindestens einen charakteristischen Eigenschaft des Messrohrs und der jeweiligen Eigenfrequenz $f_n$ einer Biegeschwingungsmode abhängt, wobei $B'_n$ insbesondere einen Quotienten aus einer modenspezifischen, frequenzunabhängigen Funktion $B_n$ und dem Quadrat der jeweiligen Eigenfrequenz $f_n$ umfasst.

Die mindestens eine charakteristische Eigenschaft umfasst gemäß einer Weiterbildung einen effektiven Massebelag bzw. eine Belagsstärke b und/oder einen effektiven Abtrag a des Materials der Rohrwand. Gemäß einer Weiterbildung der Erfindung wird für eine der beiden charakteristischen Größen ein bekannter Wert angesetzt, insbesondere Null.

In einer Weiterbildung der Erfindung weisen die Funktionen $A_n$ und $B'_n$ bzw. $B_n$ lineare Funktionen der charakteristischen Größen auf.

In einer Weiterbildung der Erfindung weist die Funktionen $A_n$ einen Term auf, welcher von einer Anordnung mindestens eines Massekörpers am Messrohr abhängig ist, wobei der Massekörper insbesondere den Erreger umfasst. Insofern als der Erreger eine nicht vernachlässigbare Masse aufweist und gewöhnlich am Ort der größten Auslenkung des Messrohrs bei symmetrischen Schwingungsmoden positioniert ist, der mit einem Schwingungsknoten der antisymmetrischen Schwingungsmoden zusammenfällt, führt die Berücksichtigung des modenspezifischen Einflusses der Schwingungen durch die Erregermasse zu einer erheblich genaueren Bestimmung der charakteristischen Größen des Messrohrs. Die Massen der Schwingungssensoren können dagegen vernachlässigt werden.

In einer Weiterbildung der Erfindung weist zumindest eine der Funktionen $B'_n$ bzw. $B_n$ Abhängigkeiten von Parametern auf, zu denen die Dichtemessung Querempfindlichkeiten aufweist. Diese Parameter sind gemäß einer Weiterbildung der Erfindung ausgewählt aus einer Liste, welche einen Mediendruck, eine Medientemperatur, und eine Umgebungstemperatur umfasst.

In einer Weiterbildung der Erfindung weisen die Funktionen $B'_n$ bzw. $B_n$ lineare Funktionen der Parameter auf.

In einer Weiterbildung der Erfindung weisen die Funktionen $A_n$ und $B'_n$ bzw. $B_n$ lineare Funktionen modenspezifischer Koeffizienten auf, wobei letztere mit dem erfindungsgemäßen Verfahren zum Justieren eines Dichtemessgeräts gewonnen werden, wobei Justierungsmessungen mit mindestens zwei Medien unterschiedlicher Dichte ermittelt werden, wobei sich die Dichte des ersten der Medien bei Normalbedingungen von der Dichte des zweiten der Medien mindestens um einen Faktor 100 insbesondere mindestens um ein Faktor 400 und bevorzugt mindestens um einen Faktor 800 unterscheidet, wobei die Medien insbesondere Luft und Wasser umfassen, und wobei bei der Justierung die Eigenfrequenzen mindestens dreier Schwingungsmoden des Messrohrs bestimmt wurden.

In einer Weiterbildung der Erfindung werden die Justierungsmessungen jeweils bei mehreren Werten der Parameter durchgeführt, zu denen die Dichtemessung eine Querempfindlichkeit aufweist.

Das erfindungsgemäße Dichtemessgerät umfasst: Mindestens ein schwingfähiges Messrohr zum Führen eines Mediums; mindestens einen Trägerkörper, wobei das mindestens eine Messrohr einlassseitig und auslassseitig mit dem Trägerrohr mechanisch gekoppelt ist, um Relativbewegungen zwischen einem einlassseitigen Endabschnitt und einem auslassseitigen Endabschnitt des Messrohrs zu unterdrücken; mindestens einen Erreger, durch welchen das mindestens eine Messrohr zu Biegeschwingungen anregbar ist; mindestens einen Schwingungssensor zum Erfassen von Biegeschwingungen des mindestens einen Messrohrs; und eine Betriebs- und Auswerteschaltung zum Speisen des Erregers mit einem Erregerstrom und zum Erfassen und Auswerten von Messsignalen des mindestens einen Schwingungssensors; wobei die Betriebs- und Auswerteschaltung dazu eingerichtet ist, das erfindungsgemäße Verfahren zum Betreiben eines Dichtemessgeräts durchzuführen, wobei insbesondere die Betriebs- und Auswerteschaltung einen Datenspeicher aufweist, in dem mit dem Verfahren gemäß Anspruch ermittelbare Koeffizienten hinterlegt sind.

In einer Weiterbildung der Erfindung ist die Mess- und Betriebsschaltung dazu eingerichtet, mindestens einen Parametermesswert vom mindestens einen Parameter zu empfangen, zu dem die Messrohrschwingungen Querempfindlichkeiten aufweisen, wobei der mindestens eine Parameter ausgewählt ist aus einer Liste, welche den Druck des im Messrohr geführten Mediums, eine Temperatur des Messrohrs und eine Temperatur des Trägerkörpers umfasst.

Die Erfindung wird nun anhand der in den Zeichnungen dargestellten Ausführungsbeispiels näher erläutert. Es zeigt:

Fig. 1a: eine Seitenansicht eines Ausführungsbeispiels eines erfindungsgemäßen Dichtemessgerätes zur Durchführung des erfindungsgemäßen Verfahrens;

Fig. 1b: eine räumliche Darstellung des Ausführungsbeispiels des erfindungsgemäßen Dichtemessgerätes aus Fig. 1a;

Fig. 1c: eine schematische Darstellung eines Querschnitts eines Messrohrs eines erfindungsgemäßen Dichtemessgerätes mit verschiedenen charakteristischen Größen mit Einfluss auf das Schwingverhalten des Messrohrs;

Fig. 2: eine schematische Darstellung von Biegelinien dreier Schwingungsmoden eines Messrohrs;

Fig. 3: ein Flussdiagramm eines Ausführungsbeispiels eines erfindungsgemäßen Verfahrens zum Betreiben eines Dichtemessgeräts; und

Fig. 4: ein Flussdiagramm eines Ausführungsbeispiels eines erfindungsgemäßen Verfahrens zum Justieren eines Dichtemessgerätes.

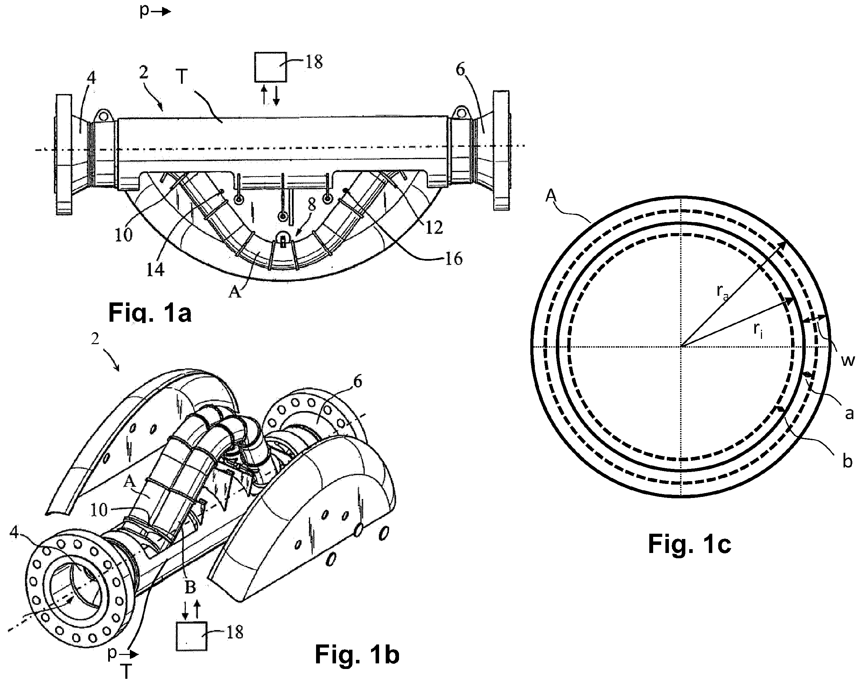

In den Figuren 1a und 1b ist ein Ausführungsbeispiel eines erfindungsgemäßen Dichtemessgeräts 2 dargestellt, welches zur Durchführung des erfindungsgemäßen Verfahrens eingerichtet ist. Das Dichtemessgerät 2 ist insbesondere auch als ein nach dem Coriolis-Prinzip arbeitendes Massedurchflussmessgerät eingerichtet, um neben der Dichtemessung eine Massedurchflussmessung durchzuführen. Das Dichtemessgerät 2 weist zwei schwingfähig gehalterte Messrohre A und B auf, die jeweils bogenförmig ausgebildet sind und parallel zueinander verlaufen. Das Dichtemessgerät 2 ist derart in eine (nicht dargestellte) Rohrleitung einsetzbar, dass die beiden Messrohre A, B von dem in der Rohrleitung strömenden Fluid durchströmt werden. Einlassseitig und auslassseitig sind die Messrohre A, B jeweils in Strömungsteilern bzw. -sammlern 4, 6 gefasst, wobei letztere durch ein Trägerrohr T starr miteinander verbunden sind. Damit sind auch die einlassseitigen und auslassseitigen Endabschnitte der Messrohre mit dem Trägerrohr T gekoppelt, wodurch Relativbewegungen zwischen den einlassseitigen und auslassseitigen Endabschnitten der Messrohre wirksam unterdrückt sind. Zwischen den beiden Messrohren A, B ist ein elektrodynamischer Erreger 8 angeordnet, durch welchen die beiden Messrohre A, B zu Biegeschwingungen gegeneinander anregbar sind, wobei eine freie Schwingungslänge der Messrohre A, B durch Koppelelemente 10, 11 festgelegt ist, mit denen die Messrohre einlassseitig und auslassseitig mechanisch gekoppelt sind. Zwischen den beiden Messrohren A, B sind jeweils an einem einlassseitigen und an einem auslassseitigen Abschnitt elektrodynamische Schwingungssensoren 14, 16 angeordnet. Das Dichtemessgerät 2 umfasst weiterhin eine Betriebs- und Auswerteschaltung 18 zum Speisen des Erregers 8 mit einem Erregerstrom und zum Erfassen und Auswerten von Messsignalen der elektrodynamischen Schwingungssensoren 14, 16. Das Dichtemessgerät 2 umfasst weiterhin einen ersten (hier nicht dargestellten) Temperatursensor, der beispielsweise an dem ersten Koppelelement 10 angeordnet ist, um einen ersten, für die Temperatur der Messrohre A, B repräsentativen Temperaturmesswert zu ermitteln. Die Positionierung des ersten Temperatursensors an dem Koppelelement 10 ist insofern sachgerecht, als das Koppelelement nur mit den Messrohren A, B verbunden ist, so dass die Temperatur des Koppelelements weitgehend durch die Temperatur der Messrohre definiert ist. Gleichermaßen kann der erste Temperatursensor auch an einem der Messrohre, insbesondere außerhalb des durch die Koppelelemente begrenzten schwingfähigen Abschnitts angeordnet sein, womit eine kürzere Ansprechzeit des ersten Temperatursensors erreicht wird. Das Dichtemessgerät 2 weist weiterhin einen zweiten (hier nicht dargestellten) Temperatursensor auf, der an dem Trägerrohr T, insbesondere an dessen innerer Mantelfläche angeordnet ist, um einen zweiten, für Temperatur des Trägerrohrs repräsentativen Temperaturmesswert bereitzustellen. Differenzen zwischen der Temperatur der Messrohre und der Temperatur des Trägerrohrs sind ursächlich für Axialspannungen die das Schwingungsverhalten der Messrohre A, B beeinflussen. Daher ist die Mess- und Betriebsschaltung 18 dazu eingerichtet, Messsignale der Temperatursensoren zu erfassen, welche die ersten und zweiten Temperaturmesswerte repräsentieren, und bei der erfindungsgemäßen Ermittlung der Mediendichte zu berücksichtigen. Weiterhin geht der erste Temperaturmesswert in die Berechnung des temperaturabhängigen Elastizitätsmoduls ein.

Zur Durchführung des erfindungsgemäßen Verfahrens ist es vorteilhaft, wenn die Mess- und Betriebsschaltung weiterhin einen Eingang für einen Druckmesswert p aufweist, um den Mediendruck bei der Durchführung des erfindungsgemäßen Verfahrens zum Betreiben des Dichtemessgeräts zu berücksichtigen zu können.

Wenngleich Fign. 1a und 1b ein Ausführungsbeispiel eines Dichtemessgeräts mit einem Paar in der Ruhelage gebogenen Messrohren zeigen, ist die Erfindung gleichermaßen anwendbar für Dichtemessgeräte mit einem einzigen Messrohr oder mit mehreren Paaren von Messrohren. Gleichermaßen können anstelle der dargestellten, in der Ruhelage gebogener Messrohre mit einer Spiegelsymmetrie bezüglich einer Messrohrquerebene auch S-förmige Messrohre oder gerade Messrohre zur Realisierung der Erfindung zum Einsatz kommen.

Fig 1c zeigt einen schematischen Querschnitt durch ein Messrohr A eines erfindungsgemäßen Dichtemessgerätes. Ein Messrohr weist in aller Regel einen metallischen Werkstoff auf, insbesondere einen rostfreien Stahl oder Titan. Grundsätzlich sind aber auch andere Materialien geeignet, beispielsweise Glas, Keramik, Halbleitermaterialien wie Silizium, oder Polymere. Das Messrohr kann in seiner Ruhelage eine gerade oder gebogene Form aufweisen. Das Messrohr A weist einen im Wesentlichen kreisförmigen Querschnitt mit einem Außenradius $r_a$ und einem initialen Innenradius $r_i$ unter Referenzbedingungen auf, wobei die Differenz der beiden Radien eine Wandstärke w des Messrohrs definiert. Durch die beiden genannten Radien ist das initiale Flächenträgheitsmoment $I_0$ des Messrohrquerschnitts im

Auslieferungszustand des Messgerätes gegeben:

$$I_0 = \frac{\pi}{4} \cdot (r_a{}^4 - r_i{}^4)$$

Sämtliche modalen Steifigkeiten des Messrohrs sind proportional zum Elastizitätsmodul E und zum Flächenträgheitsmoment I. Ersterer beschreibt eine temperaturabhängige Materialeigenschaft, und letzteres kann sich ändern, wenn mittels des im Messrohr geführten Mediums durch Abrasion oder Korrosion Material von der Wand des Messrohrs in einer Stärke a abgetragen wird. Das verbleibende Flächenträgheitsmoment I kann dann beschrieben werden als:

$$I = \frac{\pi}{4} \cdot (r_a{}^4 - (r_i + a)^4)$$

In dem Maße, wie der Materialabtrag erfolgt nimmt eine Messrohrquerschnittsfläche $A_M$ ab, die gegeben ist als:

$$A_M = \pi \cdot (r_a{}^2 - (r_i + a)^2)$$

Die Masse und damit die Trägheitskräfte des Messrohres sind proportional zu dieser Messrohrquerschnittsfläche, ebenso wie eine auf das Messrohr wirkende Axialkraft. Die genannten Größen sind daher in Abhängigkeit vom Materialabtrag a veränderlich.

Je nach Medium kann sich an der Messrohrwand ein Belag mit einer Schichtdicke b bilden. Die Masse dieses Belags ist proportional zur Belagsquerschnittsfläche $A_b$, die gegeben ist als:

$$A_b = \pi \cdot ((r_i + a)^2 - (r_i + a - b)^2)$$

In dem Maße, wie der Belag eine andere Dichte als das Medium aufweist, kann er die Dichtemessung verfälschen.

Die Masse des Mediums, bzw., auf deren Basis die Dichtemessung erfolgt, ist proportional zum lichten Rohrquerschnitt bzw. der Fluidquerschnittsfläche $A_f$:

$$A_f = \pi \cdot (r_i + a - b)^2$$

Wenngleich die obigen Gleichungen im Sinne der Allgemeingültigkeit sowohl einen Beitrag a für den Materialabtrag und einen Beitrag b für die Belagsbildung enthalten, wird in der Praxis, also an einer konkreten Messstelle in aller Regel nur eines der Phänomene auftreten, also entweder Materialabtrag, oder Belagsbildung. Durch Auswahl des Phänomens, beispielsweise bei der Inbetriebnahme, kann der jeweils nichtzutreffende Beitrag auf Null gesetzt werden.

Unter der Annahme, dass die Wandstärke w, der Materialabtrag a und die Belagsbildung b im Verhältnis zum Radius gering sind, ergeben sich die folgenden Näherungen.

Für das Flächenträgheitsmoment:

$$I = \pi \cdot r^3 \cdot w \cdot \left(1 - \frac{a}{w}\right)$$

Hierbei sind r der Innenradius des Messrohrs und w dessen Wandstärke.

Für den Messrohrquerschnitt:

$$A_M = 2 \cdot \pi \cdot r \cdot w \cdot \left(1 - \frac{a}{w}\right)$$

Für die Fluidquerschnittsfläche:

$$A_f = \pi \cdot r^2 \cdot \left(1 + \frac{2a}{r} - \frac{2b}{r}\right)$$

Für die Belagsquerschnittsfläche:

$$A_b = 2 \cdot \pi \cdot r \cdot b$$

Mit den obigen Termen ist dargestellt, wie sich für das Schwingungsverhalten eines Messrohrs relevante geometrische Größen durch Belagsbildung und Materialabtrag verändern.

Ein weiterer Gesichtspunkt zur Modellierung eines Oszillators mit einem schwingenden Messrohr betrifft dessen Anbauteile, da deren Masse die Schwingungseigenschaften modenabhängig beeinflussen. Hierbei ist insbesondere die Erregermasse $m_E$ zu berücksichtigen, da der Erreger gewöhnlich in einem Schwingungsbauch der symmetrischen Schwingungsmoden und an einem Schwingungsknoten der antisymmetrischen Schwingungsmoden positioniert ist. Die inhomogene Masseverteilung entlang des Messrohrs erleichtert die Identifikation der verschiedenen Veränderungen, des Messrohrs bzw. des Mediums, die sich bei einer homogenen Massenverteilung nicht ohne Weiteres unterscheiden ließen. Insofern, als die modenspezifische kinetische Energie des Erregers zur modenspezifischen kinetischen Energie des Oszillators beiträgt, ist es vorteilhaft, diese bei der Modellierung des Oszillators zu berücksichtigen. Das modenabhängige Verhältnis der kinetischen Energien von Erregermasse und Messrohrmasse ist gegeben als:

$$r_{c0n} = \frac{m_E \cdot a_n{}^2(0)}{\rho_T \cdot \pi \cdot r \cdot \mathrm{w} \cdot l}$$

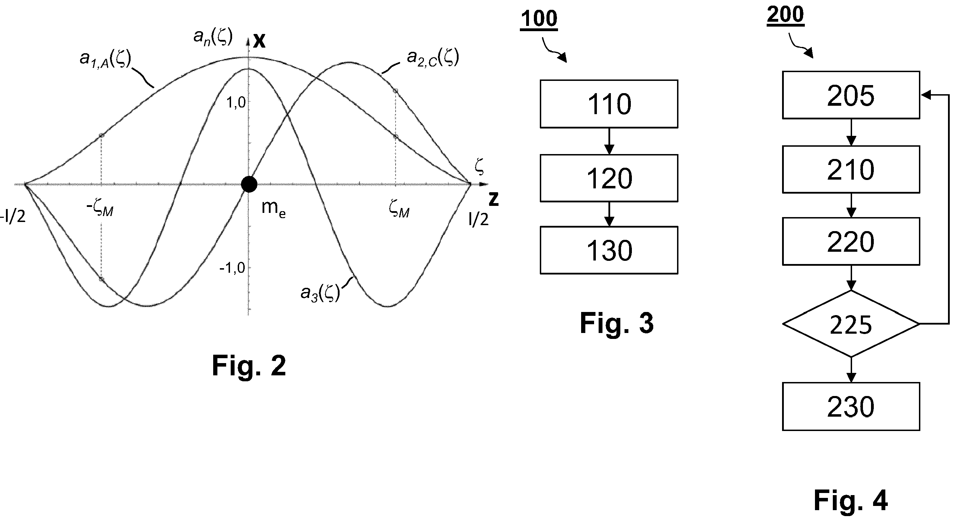

Hierbei sind I die Messrohrlänge $\rho_T$ die Dichte des Messrohrwerkstoffs, $m_E$ die Erregermasse und $a_n(0)$ die modenabhängige Auslenkung in der Messrohrmitte, wobei die Auslenkung mit einem Normungsteiler normiert ist. Der modenspezifische Normierungsteiler ist gegeben als die Wurzel des Integrals $d\zeta$ des Auslenkungsquadrats $(a_n(\zeta))^2$, der modenspezifischen Biegelinie von der Messrohrmitte bis zu einem Ende des Messrohrs, also von $\zeta=0$ bis $\zeta=l/2$. Beispiele für die Biegelinien der ersten drei Biegeschwingungsmoden eines geraden Messrohrs sind in Fig 2 dargestellt.

Neben den obigen Eigenschaften des Oszillators sind schließlich noch die Medieneigenschaften zu berücksichtigen, insbesondere die Kompressibilität des Mediums aufgrund einer Gasbeladung. Bekanntermaßen ist der Dichtewert $\rho_M$ eines kompressiblen Mediums durch Multiplikation eines vorläufigen Dichtewerts $\rho_{prel}$, der unter Annahme eines inkompressiblen Mediums ermittelt wurde, mit einem Korrekturfaktor K erhältlich, also:

$$\rho_M = \rho_{prel} \cdot K(f_0, f_n) \,,$$

wobei der Korrekturfaktor K gegeben ist als:

$$K(f_0, f_n) = \frac{1}{K_0 + \frac{K_1}{1 - \left(\frac{f_n}{f_0}\right)^2}} \,,$$

wobei $f_n$ die Eigenfrequenz der n-ten Schwingungsmode des Oszillators ist, wobei $f_0$ die Resonanzfrequenz des gegen das Messrohr schwingenden Mediums ist, wobei $K_0$ und $K_1$ Gewichtungsfaktoren sind mit Ko = 0,163 und $K_1$ = 1 - Ko.

Die Resonanzfrequenz $f_0$ des Mediums ist in erster Näherung gegeben als:

$$f_0 = \frac{c \cdot \lambda}{2\pi \cdot r} \,,$$

wobei c die Schallgeschwindigkeit des Mediums ist, und $\lambda$ ein Eigenwert mit dem Wert $\lambda$ = 1,842 ist.

Damit kann der Korrekturfaktor K auch als Funktion der Eigenfrequenz der n-ten Schwingungsmode des Oszillators und der Schallgeschwindigkeit des gegen das Messrohr schwingenden Mediums angegeben werden, also:

$$K(c, f_n) = \frac{1}{K_0 + \frac{K_1}{1 - \left(\frac{f_n}{\frac{c \cdot \lambda}{2\pi \cdot r}}\right)^2}} \qquad\qquad \text{(L1)},$$

Zur Ermittlung der Mediendichte sind die Eigenfrequenzen $f_n$ mindestens dreier Schwingungsmoden insbesondere $f_1$, $f_2$ und $f_3$ anzuregen, und das folgende Gleichungssystem ist zu lösen:

$$\rho_M = K(c, f_n) \cdot [A_n + B'_n(f_n)] \qquad (L2)$$

Wobei gilt:

$$A_n = c_{0n} \cdot \left[1 - \left(\frac{2}{r} + \frac{1}{w}\right) \cdot a + \frac{2}{r} \cdot b + r_{c0n} \cdot \left(1 - \frac{2}{r} \cdot a + \frac{2}{r} \cdot b\right)\right] - \rho_b \cdot \frac{2}{r} \cdot b \qquad (L3),$$

wobei $\rho_b$ die Belagsdichte bezeichnet,
wobei:

$$B'_n(f_n) = B_n \cdot \frac{1}{f_n^2} \qquad (L4),$$

mit:

$$B_n = (c_{1n} + c_{2n} \cdot T_M + c_{3n} \cdot T_T) \cdot \left(1 - \left(\frac{2}{r} + \frac{1}{w}\right) \cdot a + \frac{2}{r} \cdot b\right) + c_{4n} \cdot p \qquad (L5),$$

wobei $T_M$ und $T_T$ die Temperaturen des Messrohrs und eines Trägerkörpers sind, wobei die Enden des Messrohrs am Trägerkörper fixiert sind, und wobei p den Druck des Mediums bezeichnet. Die genannten Temperaturen und der Mediendruck sind Messgrößen. Der Radius r und die Wandstärke w sind die initialen Werte für Innenradius und Wandstärke des Messrohrs. Die Dichte des Belags $\rho_b$ ist ein medienabhängiger Materialparameter, der bereitzustellen ist, wenn das Verfahren für ein Medium angewendet wird, in dem Belagsbildung zu erwarten ist. Die Koeffizienten $c_{0n}$, $c_{1n}$, $c_{2n}$, $c_{3n}$ und $c_{4n}$, sind bei einer initialen Justierung des Messgerätes zu ermitteln, wie weiter unten erläutert wird. In dem Gleichungssystem L2 sind neben dem gesuchten Dichtewert $\rho_M$, die Schallgeschwindigkeit c, der Materialabtrag a und die Belagsstärke b unbekannte Größen, wobei je nach Medium a oder b mit Null angesetzt werden können.

Damit verbleiben nur drei unbekannte Größen, nämlich erstens der Dichtewert $\rho_M$, zweitens die Schallgeschwindigkeit c, und drittens entweder der Materialabtrag a oder und die Belagsstärke b, womit die Größen auf Basis der drei Eigenfrequenzen $f_n$ zu bestimmen sind.

Wenn an einer Messstelle Materialabtrag zu erwarten ist, kann dieser nunmehr im laufenden Messbetrieb auch bei Medien mit Gasbeladung bei laufender Dichtemessung genau ermittelt werden. Die aus dem Materialabtrag resultierende Veränderung des Messrohrs mit einhergehend abnehmender Druckfestigkeit kann bei Überschreitung eines Grenzwerts signalisiert werden, beispielsweise durch einen Alarm.

Sofern das Dichtemessgerät auch als Coriolis-Massedurchflussmessgerät ausgebildet ist, kann die Auswirkung des Materialabtrags auf einen Kalibrierfaktor calf für die Massedurchflussmessung berücksichtigt werden, welcher eine zu ermittelnde Massedurchflussrate zu einer gemessenen Zeitdifferenz zwischen den Nulldurchgängen zweier Schwingungssensoren in Beziehung setzt. Bei gängigen Coriolis-Massedurchflussmessgeräten erfolgt die Anregung der ersten symmetrischen Biegeschwingungsmode, der sogenannten $f_1$-Mode. In diesem Fall ist der Kalibrierfaktor insbesondere von der modalen Steifigkeit der ersten antisymmetrischen Biegeschwingungsmode, der sogenannten $f_2$-Mode abhängig. Unter Anwendung des erfindungsgemäßen Verfahrens kann nun eine vom Materialabtrag abhängige Veränderung des Kalibrierfaktors festgestellt werden. Im einfachsten Fall kann dann eine abnehmende Messgenauigkeit signalisiert werden, oder der Kalibrierfaktor calf kann abtragsabhängig angepasst werden.

Wenn dagegen Belagsbildung zu erwarten ist, kann dies ebenfalls bei Überschreitung eines Grenzwerts signalisiert werden, um beispielsweise eine Reinigung des Messrohrs zu veranlassen. Die Reinigung kann nun auch im eingebauten Zustand des Dichtemessgerätes erfolgen, da die Belagsstärke auch während des Reinigungsvorgangs bestimmbar ist.

Durch Ermitteln der Schallgeschwindigkeit bietet die Erfindung damit, unabhängig von Belag oder Materialabtrag, die Grundlage zum Bestimmen eines Gasvolumenanteils im Medium.

Die Schritte des erfindungsgemäßen Verfahrens 100 zum Betreiben eines Dichtemessgeräts der im Zusammenhang von Figuren 1a und 1b beschriebenen Art sind zusammenfassend in Fig. 3 dargestellt. In einem ersten Schritt erfolgt das Anregen 110 mindestens dreier Schwingungsmoden des Messrohrs. Es folgt das Ermitteln 120 von Eigenfrequenzmesswerten $f_n$ der mindestens drei Schwingungsmoden. Auf Basis dieser Eigenfrequenzmesswerten $f_n$ kann das Ermitteln (130) eines Dichtemesswerts $\rho_M$ des Mediums unter Berücksichtigung einer ggf. vorhandenen Gasbeladung; und Ermitteln einer charakteristischen Eigenschaft a, b des mindestens Messrohrs auf Basis der Eigenfrequenzen der drei Schwingungsmoden erfolgen, indem das obige Gleichungssystem L2 gelöst wird.

Die Koeffizienten $c_{0n}$, $c_{1n}$, $c_{2n}$, $c_{3n}$ und $c_{4n}$, des Gleichungssystems sind bei einer initialen Justierung des Messgerätes zu ermitteln, indem das Dichtemessgerät mit Luft und Wasser als Medium beaufschlagt wird, wobei die

Eigenfrequenzen $f_n$ mindestens dreier Schwingungsmoden erfasst bei mehreren Werten für die Temperaturen $T_M$ und $T_T$ sowie den Druck p werden. Insofern, als zu diesem Zeitpunkt sowohl weder Materialabtrag noch Belagsbildung vorliegen vereinfacht sich das Gleichungssystem L2 zu:

$$\rho_M = K(c, f_n) \cdot \left[ c_{0n} \cdot (1 + r_{c0n}) + (c_{1n} + c_{2n} \cdot T_M + c_{3n} \cdot T_T + c_{4n} \cdot p) \cdot \frac{1}{f_n^2} \right] \quad \text{L6}$$

Sofern die Justierungsmessungen mit Wasser bei einem ausreichend hohen Betriebsdruck durchgeführt werden, der den jeweiligen Dampfdruck deutlich übersteigt, kann für den Korrekturfaktor $K(c, f_n) = 1$ angenommen werden. Für die Justierungsmessungen mit Luft kann ebenfalls pauschal mit $K(c, f_n) = 1$ gerechnet werden. Es führt sogar zu ausreichend genauen Ergebnissen, die Dichte von Luft bei Normaldruck pauschal mit einem konstanten Wert von 1,2 kg/m² anzusetzen.

Für die Dichte von Wasser sind entsprechend der geforderten Genauigkeit jeweils temperatur- und druckabhängige Referenzwerte anzusetzen.

Zur Berechnung des modenabhängigen Verhältnisses $r_{c0n}$ kann auf der Basis von numerischer Modalanalyse der Eigenformen der Biegeschwingungsmoden die normierte Schwingungsamplitude $a_n(0)$ an der Position des Erregers ermittelt werden um das modenabhängigen Verhältnis $r_{c0n}$ zu berechnen gemäß:

$$r_{c0n} = \frac{m_E \cdot a_n^2(0)}{\rho_M \cdot \pi \cdot r \cdot w \cdot l}.$$

Damit verbleiben nur die vier Koeffizienten $c_{0n}$, $c_{1n}$, $c_{2n}$, $c_{3n}$ und $c_{4n}$ als Unbekannte, die durch Lösung des Gleichungssystems L6 zu bestimmen sind.

Das erfindungsgemäße Justierungsverfahren 200 ist in Fig. 4 dargestellt. Es beginnt mit dem Einstellen 205 eines Satzes von Messbedingungen aus einer Folge unterschiedlicher Sätze von Messbedingungen, wobei die Messbedingungen eine Mediendichte ($\rho_M$) und einen Wertesatz der Parameter, zu denen das Messrohr eine Querempfindlichkeit aufweist, umfassen. Diese Parameter sind insbesondere der Druck und die Temperatur des Mediums. Es folgt das Anregen 210 mindestens dreier Schwingungsmoden des mindestens einen Messrohrs des Dichtemessgerätes sowie das Ermitteln (220) der Eigenfrequenzen ($f_n$) der Schwingungsmoden.

Das Anregen symmetrischer Schwingungsmoden ist mit einem symmetrisch angeordneten Erreger unproblematisch. Um auch antisymmetrische Schwingungsmoden anregen zu können, besteht die Möglichkeit den Erreger leicht exzentrisch anzuordnen, oder ein antisymmetrisches Erregersignal über zwei symmetrisch angeordnete Schwingungssensoren einzuspeisen.

Anschließend folgt das Überprüfen (225) ob die Messung bei einer ausreichenden Zahl von Sätzen von Messbedingungen durchgeführt wurde und das Wiederholen der vorhergehenden Verfahrensschritte mit einem neuen Satz aus der Folge der unterschiedlichen Sätze von Messbedingungen, bei einem negativen Ergebnis der Überprüfung. Wenn dagegen eine ausreichende Zahl von Messungen bei unterschiedlichen Messbedingungen durchgeführt wurde, erfolgt das Berechnen (230) der modenspezifischen Koeffizienten ($c_{0n}$, $c_{1n}$, $c_{2n}$, $c_{3n}$, $c_{4n}$). Diese werden in einem Datenspeicher der Mess- und Betriebsschaltung des Dichtemessgerätes hinterlegt, um eine Durchführung des erfindungsgemäßen Verfahrens zur Dichtemessung zu ermöglichen.

## Patentansprüche

1. Verfahren (100) zum Betreiben eines Dichtemessgerätes, welches mindestens ein schwingfähiges Messrohr zum Führen eines Mediums und einen an dem Messrohr angeordneten Erreger zum Anregen von Schwingungsmoden des mindesten einen Messrohrs und einen Trägerkörper umfasst, wobei das Messrohr einlaufseitige und auslaufseitige Endabschnitte aufweist, die mit dem Trägerkörper verbunden sind, wobei das Verfahren die folgenden Schritte aufweist:

Anregen (110) mindestens dreier Schwingungsmoden des Messrohrs;
Ermitteln (120) von Eigenfrequenzmesswerten ($f_n$) der mindestens drei Schwingungsmoden;
Ermitteln (130) eines Dichtemesswerts ($\rho_M$) des Mediums unter Berücksichtigung einer ggf. vorhandenen Gasbeladung; und Ermitteln einer charakteristischen Eigenschaft (a, b, w) des mindestens einen Messrohrs auf Basis der Eigenfrequenzen der drei Schwingungsmoden, wobei die charakteristische Eigenschaft des Messrohrs einen effektiven Wandstärkewert (w) bzw. einen effektiven Materialabtragswert (a) von der Wand des Messrohrs oder einen effektive Massebelagswert für einen Massebelag an der Wand des Messrohrs umfasst.

**2.** Verfahren nach Anspruch 1, wobei der effektive Massebelagswert einen Belagsstärkewert (b) umfasst, der in Abhängigkeit eines Dichtewerts ($\rho_B$) für ein Material des Massebelags ermittelt wird.

**3.** Verfahren nach einem der vorhergehenden Ansprüche, weiterhin umfassend: das Erfassen mindestens eines Parametermesswerts mindestens eines Parameters, zu dem mindestens eine der Eigenfrequenzen eine Querempfindlichkeit aufweist.

**4.** Verfahren nach Anspruch 3, wobei der mindestens eine Parameter ausgewählt aus einer Liste, welche eine Temperatur ($T_M$) des mindestens einen Messrohrs, eine Temperatur ($T_T$) des Trägerkörpers, und einen Druck (p) des in dem Messrohr geführten Mediums umfasst.

**5.** Verfahren nach einem der vorhergehenden Ansprüche, wobei die mindestens drei Schwingungsmoden aus einer Liste ausgewählt sind, welche die erste symmetrische Schwingungsmode ($f_1$-Mode), die erste antisymmetrische Schwingungsmode ($f_2$-Mode), die zweite symmetrische Schwingungsmode ($f_3$-Mode), die zweite antisymmetrische Schwingungsmode ($f_4$-Mode), die dritte symmetrische Schwingungsmode ($f_5$-Mode), und die dritte antisymmetrische Schwingungsmode ($f_6$-Mode) umfasst.

**6.** Verfahren nach Anspruch 5, wobei, die Moden mit den geringsten modalen Biegesteifigkeiten ausgewählt sind, insbesondere die $f_1$-Mode, die $f_2$-Mode und die $f_3$-Mode.

**7.** Verfahren nach einem der vorhergehenden Ansprüche, wobei das Anregen der Biegeschwingungsmoden durch Scannen geeigneter Frequenzbereiche und Regeln auf eine definierte Phasenbeziehung zwischen der Schwingungsamplitude und dem Erregersignal erfolgt.

**8.** Verfahren nach einem der vorhergehenden Ansprüche, wobei das Ermitteln des Dichtemesswerts das Lösen eines Gleichungssystems mindestens dreier Gleichungen des Typs:

$$\rho_M = K(c, f_n)[A_n + B'_n(f_n)]$$

umfasst,
wobei
$\rho_M$ die Mediendichte ist,
K eine Korrekturfunktion für den Resonatoreffekt beschreibt, und
c die Schallgeschwindigkeit des im Rohr geführten Mediums ist,
wobei $A_n$ eine modenspezifische Funktion ist, die von einer charakteristischen Eigenschaft $h_i$ des Messrohrs abhängt, wobei $A_n$ von der jeweiligen Eigenfrequenz einer Biegeschwingungsmode unabhängig ist, und
$B'_n$ eine modenspezifische Funktion ist, die von der mindestens einen charakteristischen Eigenschaft $h_i$ des Messrohrs und der jeweiligen Eigenfrequenz $f_n$ einer Biegeschwingungsmode abhängt, wobei $B'_n$ insbesondere einen Quotienten aus einer modenspezifischen, frequenzunabhängigen Funktion $B_n$ und dem Quadrat der jeweiligen Eigenfrequenz $f_n$ umfasst.

**9.** Verfahren nach Anspruch 8, wobei die Funktionen $A_n$ und $B'_n$ bzw. $B_n$ lineare Funktionen mindestens einer der charakteristischen Eigenschaften Materialabtrag (a) oder Belagsstärke (b) aufweisen.

**10.** Verfahren nach Anspruch 8 oder 9, wobei für eine der beiden charakteristischen Eigenschaften Materialabtrag (a) und Belagsstärke (b) ein vorgegebener Wert angesetzt wird, insbesondere Null.

**11.** Verfahren nach einem der Ansprüche 8 bis 10, wobei die Funktionen $A_n$ einen Term aufweist, welcher von einer Anordnung mindestens eines Massekörpers am Messrohr abhängt, wobei der Massekörper insbesondere den Erreger umfasst.

**12.** Verfahren nach Anspruch 4 und einem der Ansprüche 8 bis 11, wobei die Funktionen $B_n$ eine Abhängigkeit von mindestens einem der Parameter aufweist, zu denen die Dichtemessung Querempfindlichkeiten aufweist, wobei die Funktion $B_n$ insbesondere eine lineare Funktion des mindestens einen der Parameter aufweist.

**13.** Verfahren (200) zum Justieren eines Dichtemessgerätes mit einer Betriebs- und Auswerteschaltung (18), die dazu eingerichtet ist, das Verfahren nach einem der Ansprüche 1 bis 12 durchzuführen, wobei die Funktionen $A_n$ und $B'_n$

bzw. $B_n$ lineare Funktionen modenspezifischer Koeffizienten ($c_{0n}$, $c_{1n}$, $c_{2n}$, $c_{3n}$, $c_4n$) umfassen, wobei die modenspezifischen Koeffizienten ($c_{0n}$, $c_{1n}$, $c_{2n}$, $c_{3n}$, $c_4n$) auf Basis von Justierungsmessungen mit mindestens zwei Medien unterschiedlicher Dichte ermittelt werden, wobei die Justierungsmessungen jeweils bei mehreren Werten der Parameter durchgeführt werden, zu denen die Dichtemessung eine Querempfindlichkeit aufweist, und wobei bei den Justierungsmessungen die Eigenfrequenzen mindestens dreier Schwingungsmoden des Messrohrs bestimmt werden, wobei das Verfahren (200) umfasst:

Einstellen (205) eines Satzes von Messbedingungen aus einer Folge unterschiedlicher Sätze von Messbedingungen umfassen, wobei die Messbedingungen umfassen: eine Mediendichte ($\rho_M$), und einen Wertesatz der Parameter, zu dem das Messrohr eine Querempfindlichkeit aufweist,
Anregen (210) mindestens dreier Schwingungsmoden des mindestens einen Messrohrs des Dichtemessgerätes;
Ermitteln (220) der Eigenfrequenzen ($f_n$) der Schwingungsmoden;
Überprüfen (225) ob die Messung bei einer ausreichenden Zahl von Sätzen von Messbedingungen durchgeführt wurde;
Wiederholen der vorhergehenden Verfahrensschritte mit dem nächsten Satz aus der Folge der unterschiedlichen Sätze von Messbedingungen, bei einem negativen Ergebnis der Überprüfung; und
Berechnen (230) der modenspezifischen Koeffizienten ($c_{0n}$, $c_{1n}$, $c_{2n}$, $c_{3n}$, $c_4n$) bei einem positiven Ergebnis der Überprüfung (225).

14. Dichtemessgerät (2) umfassend:

Mindestens ein schwingfähiges Messrohr (A, B) zum Führen eines Mediums;
mindestens einen Trägerkörper (T), wobei das mindestens eine Messrohr (A, B) einlassseitig und auslassseitig mit dem Trägerrohr (T) mechanisch gekoppelt ist, um Relativbewegungen zwischen einem einlassseitigen Endabschnitt und einem auslassseitigen Endabschnitt des Messrohrs zu unterdrücken;
mindestens einen Erreger (8), durch welchen das mindestens eine Messrohr (A, B) zu Biegeschwingungen anregbar ist;
mindestens einen Schwingungssensor (14, 16) zum Erfassen von Biegeschwingungen des mindestens einen Messrohrs (A, B); und
eine Betriebs- und Auswerteschaltung (18) zum Speisen des Erregers (8) mit einem Erregerstrom und zum Erfassen und Auswerten von Messsignalen des mindestens einen Schwingungssensors (14, 16);
wobei die Betriebs- und Auswerteschaltung (18) dazu eingerichtet ist, das Verfahren nach einem der Ansprüche 1 bis 12 durchzuführen.
wobei insbesondere die Betriebs- und Auswerteschaltung (18) einen Datenspeicher aufweist, in dem mit dem Verfahren gemäß Anspruch 13 ermittelbare Koeffizienten hinterlegt sind.

15. Dichtemessgerät (2) nach Anspruch 14, wobei die Mess- und Betriebsschaltung dazu eingerichtet ist, mindestens einen Parametermesswert vom mindestens einem Parameter zu empfangen, zu dem die Messrohrschwingungen Querempfindlichkeiten aufweisen, wobei der mindestens eine Parameter ausgewählt ist aus einer Liste, welche den Druck des im Messrohr geführten Mediums, eine Temperatur des Messrohrs und eine Temperatur des Trägerkörpers umfasst.

## Claims

1. A method (100) for operating a density meter, which comprises at least one measuring tube that can oscillate for conducting a medium, and an exciter arranged on the measuring tube for initiating oscillation modes of the at least one measuring tube, and a support body, wherein the measuring tube has inlet-side and outlet-side end sections which are connected to the support body, wherein the method includes the following steps:

Initiating (110) at least three oscillation modes of the measuring tube;
Determining (120) natural frequency measured values (fn) of the at least three oscillation modes;
Determining (130) a density measured value ($\rho_M$) of the medium, taking any gas load present into account; and
determining a characteristic property (a, b, w) of the at least one measuring tube based on the natural frequencies of the three oscillation modes, wherein the characteristic property of the measuring tube comprises an effective wall thickness value (w) or an effective material removal value (a) of the wall of the measuring tube, or an effective mass coating value for a mass coating on the wall of the measuring tube.

2. The method as claimed in claim 1, wherein the effective mass coating value comprises a coating thickness value (b), which is determined as a function of a density value ($\rho_B$) for a material of the mass coating.

3. The method as claimed in one of the preceding claims, further comprising:
Detecting at least one parameter measured value of at least one parameter to which at least one of the natural frequencies has a cross-sensitivity.

4. The method as claimed in claim 3, wherein the at least one parameter is selected from a list which comprises a temperature ($T_M$) of the at least one measuring tube, a temperature ($T_T$) of the support body, and a pressure (p) of the medium conducted in the measuring tube.

5. The method as claimed in one of the preceding claims, wherein the at least three oscillation modes are selected from a list which comprises the first symmetrical oscillation mode ($f_1$ mode), the first antisymmetric oscillation mode ($f_2$ mode), the second symmetrical oscillation mode ($f_3$ mode), the second antisymmetric oscillation mode ($f_4$ mode), the third symmetrical oscillation mode ($f_5$ mode), and the third antisymmetric oscillation mode ($f_6$ mode).

6. The method as claimed in claim 5, wherein the modes with the smallest modal bending stiffnesses are selected, in particular the $f_1$ mode, the $f_2$ mode and the $f_3$ mode.

7. The method as claimed in one of the preceding claims, wherein the bending oscillation modes are initiated by scanning suitable frequency ranges and adjusting to a defined phase relation between the oscillation amplitude and the exciter signal.

8. The method as claimed in one of the preceding claims, wherein the determination of the density measured value involves solving a system of equations made up of at least three equations of the type:

$$\rho_M = K(c, f_n)[A_n + B'_n(f_n)]$$

wherein

$\rho_M$ is the media density,
K describes a correction function for the resonator effect, and
c is the sound velocity of the medium conducted in the tube,
wherein $A_n$ is a mode-specific function which depends on a characteristic property hi of the measuring tube,
wherein $A_n$ is independent of the respective natural frequency of a bending oscillation mode, and
$B'_n$ is a mode-specific function which depends on the at least one characteristic property hi of the measuring tube and the respective natural frequency $f_n$ of a bending oscillation mode, wherein $B'_n$ in particular comprises a quotient of a mode-specific, non-frequency-dependent function $B_n$ and the square of the respective natural frequency $f_n$.

9. The method as claimed in claim 8, wherein the functions $A_n$ and $B'_n$ or $B_n$ have linear functions of at least one of the characteristic properties of material removal (a) or coating thickness (b).

10. The method as claimed in claim 8 or 9, wherein a specified value, in particular zero, is applied to one of the two characteristic properties of material removal (a) and coating thickness (b).

11. The method as claimed in one of claims 8 to 10, wherein the function An has a term which depends on an arrangement of at least one solid body on the measuring tube, wherein the solid body comprises in particular the exciter.

12. The method as claimed in claim 4 and one of claims 8 to 11, wherein the function $B_n$ is dependent on at least one of the parameters to which the density measurement has cross-sensitivities, wherein the function $B_n$ in particular has a linear function of at least one of the parameters.

13. A method (200) for adjusting a density meter with an operating and evaluation circuit (18), which is configured to carry out the method as claimed in one of claims 1 to 12,

wherein the functions An and $B'_n$ or Bn comprise linear functions of mode-specific coefficients ($C_{0n}$, $C_{1n}$, $C_{2n}$, $C_{3n}$,

$C_{4n}$), wherein the mode-specific coefficients ($C_{0n}$, $C_{1n}$, $C_{2n}$, $C_{3n}$, $C_4n$) are determined based on adjustment measurements with at least two media with different densities, wherein each adjustment measurement is performed with multiple values of the parameters to which the density measurement has a cross-sensitivity, and wherein the natural frequencies of at least three oscillation modes of the measuring tube are determined during the adjustment measurements, wherein the method (200) comprises: Configuring (205) a set of measuring conditions from a sequence of different sets of measuring conditions, wherein the measuring conditions comprise: A media density ($\rho_M$), and a set of values for the parameters to which the measuring tube has a cross-sensitivity;

Initiating (210) at least three oscillation modes of the at least one measuring tube of the density meter;

Determining (220) the natural frequencies ($f_n$) of the oscillation modes;

Checking (225) whether the measurement was performed with a sufficient number of sets of measuring conditions;

Repeating the preceding process steps with the next set from the sequence of different sets of measuring conditions if the check is negative; and

Calculating (230) the mode-specific coefficients ($C_{0n}$, $C_{1n}$, $C_{2n}$, $C_{3n}$, $C_{4n}$) if the check is positive (225).

14. A density meter (2) comprising:

At least one measuring tube (A, B) that can oscillate for conducting a medium;

At least one support body (T), wherein the at least one measuring tube (A, B) is mechanically coupled with the support tube (T) on the inlet side and on the outlet side in order to suppress relative movements between an inlet-side end section and an outlet-side end section of the measuring tube;

At least one exciter (8), which can be used to cause bending oscillations of the at least one measuring tube (A, B);

At least one oscillation sensor (14, 16) for detecting bending oscillations of the at least one measuring tube (A, B); and

An operating and evaluation circuit (18) for supplying the exciter (8) with an exciting current and for detecting and evaluating measurement signals from the at least one oscillation sensor (14, 16);

wherein the operating and evaluation circuit (18) is configured to carry out the method as claimed in one of claims 1 to 12,

wherein the operating and evaluation circuit (18) in particular has a memory in which coefficients which can be determined using the method as claimed in claim 13 are saved.

15. The density meter (2) as claimed in claim 14, wherein the measuring and operating circuit is configured to receive at least one parameter measured value of at least one parameter to which the measuring tube oscillations have cross-sensitivities, wherein the at least one parameter is selected from a list which comprises the pressure of the medium conducted in the measuring tube, a temperature of the measuring tube, and a temperature of the support body.

**Revendications**

1. Procédé (100) destiné à l'exploitation d'un débitmètre massique, lequel débitmètre comprend au moins un tube de mesure apte à vibrer et destiné à guider un produit, lequel débitmètre comprend un excitateur disposé sur le tube de mesure et destiné à exciter des modes de vibration de l'au moins un tube de mesure et lequel débitmètre comprend un corps de support, le tube de mesure présentant des parties d'extrémité côté entrée et côté sortie qui sont reliées au corps de support, lequel procédé comprend les étapes suivantes :

Excitation (110) d'au moins trois modes de vibration du tube de mesure ;

Détermination (120) de valeurs mesurées de la fréquence propre ($f_n$) des au moins trois modes de vibration ;

Détermination (130) d'une valeur mesurée de masse volumique ($\rho_M$) du produit en tenant compte d'une charge de gaz éventuellement présente ; et détermination d'une propriété caractéristique (a, b, w) de l'au moins un tube de mesure sur la base des fréquences propres des trois modes de vibration, la propriété caractéristique du tube de mesure comprenant une valeur d'épaisseur de paroi effective (w) ou une valeur d'usure du matériau effective (a) de la paroi du tube de mesure ou une valeur de dépôt massique effective pour un dépôt massique sur la paroi du tube de mesure.

2. Procédé selon la revendication 1, pour lequel la valeur de dépôt massique effective comprend une valeur d'épaisseur de dépôt (b) qui est déterminée en fonction d'une valeur de masse volumique ($\rho_B$) pour un matériau du dépôt massique.

3. Procédé selon l'une des revendications précédentes, comprenant en outre l'étape suivante :
Acquisition d'au moins une valeur mesurée d'au moins un paramètre pour lequel au moins une des fréquences propres présente une sensibilité transversale.

4. Procédé selon la revendication 3, pour lequel l'au moins un paramètre est choisi dans une liste comprenant une température ($T_M$) de l'au moins un tube de mesure, une température ($T_T$) du corps de support et une pression (p) du produit guidé dans le tube de mesure.

5. Procédé selon l'une des revendications précédentes, pour lequel les au moins trois modes de vibration sont choisis dans une liste comprenant le premier mode de vibration symétrique (mode $f_1$), le premier mode de vibration antisymétrique (mode $f_2$), le deuxième mode de vibration symétrique (mode $f_3$), le deuxième mode de vibration antisymétrique (mode $f_4$), le troisième mode de vibration symétrique (mode $f_5$) et le troisième mode de vibration antisymétrique (mode $f_6$).

6. Procédé selon la revendication 5, pour lequel les modes présentant les plus faibles rigidités modales à la flexion sont sélectionnés, notamment le mode $f_1$, le mode $f_2$ et le mode $f_3$.

7. Procédé selon l'une des revendications précédentes, pour lequel l'excitation des modes de vibration de flexion s'effectue par balayage de gammes de fréquences appropriées et par régulation sur une relation de phase définie entre l'amplitude de vibration et le signal d'excitation.

8. Procédé selon l'une des revendications précédentes, pour lequel la détermination de la valeur mesurée de masse volumique comprend la résolution d'un système d'au moins trois équations du type :

$$\rho_M = K(c, f_n)[A_n + B'_n(f_n)]$$

où

$\rho_M$ est la densité du produit,
K décrit une fonction de correction pour l'effet de résonance, et
c est la vitesse du son du produit guidé dans le tube,
$A_n$ étant une fonction spécifique au mode qui dépend d'une propriété caractéristique $h_i$ du tube de mesure, $A_n$ ne dépendant pas de la fréquence propre respective d'un mode de vibration de flexion, et
$B'_n$ étant une fonction spécifique au mode qui dépend de l'au moins une propriété caractéristique $h_i$ du tube de mesure et de la fréquence propre respective $f_n$ d'un mode de vibration de flexion, $B'_n$ comprenant notamment un quotient d'une fonction $B_n$ spécifique au mode, indépendante de la fréquence, et du carré de la fréquence propre $f_n$ respective.

9. Procédé selon la revendication 8, pour lequel les fonctions $A_n$ et $B'_n$ ou $B_n$ sont des fonctions linéaires d'au moins une des propriétés caractéristiques d'usure du matériau (a) ou d'épaisseur de dépôt (b).

10. Procédé selon la revendication 8 ou 9, pour lequel on applique une valeur prédéfinie, notamment zéro, à l'une des deux propriétés caractéristiques que sont l'usure du matériau (a) et l'épaisseur de dépôt (b).

11. Procédé selon l'une des revendications 8 à 10, pour lequel les fonctions $A_n$ présentent un terme qui dépend d'un agencement d'au moins un corps de masse sur le tube de mesure, le corps de masse comprenant notamment l'excitateur.

12. Procédé selon la revendication 4 et l'une des revendications 8 à 11, pour lequel les fonctions $B_n$ présentent une dépendance vis-à-vis d'au moins un des paramètres pour lesquels la mesure de masse volumique présente des sensibilités transversales, la fonction $B_n$ présentant notamment une fonction linéaire de l'au moins un des paramètres.

13. Procédé (200) destiné à l'ajustement d'un débitmètre massique avec un circuit de fonctionnement et d'évaluation (18) conçu pour mettre en œuvre le procédé selon l'une des revendications 1 à 12,

les fonctions $A_n$ et $B'_n$ ou $B_n$ comprenant des fonctions linéaires de coefficients spécifiques aux modes ($C_{0n}$, $C_{1n}$,

$C_{2n}$, $C_{3n}$, $C_{4n}$), les coefficients spécifiques aux modes ($C_{0n}$, $C_{1n}$, $C_{2n}$, $C_{3n}$, $C_{4n}$) étant déterminés sur la base de mesures d'ajustement avec au moins deux produits de masses volumiques différentes, les mesures d'ajustement étant respectivement effectuées pour plusieurs valeurs des paramètres pour lesquels la mesure de masse volumique présente une sensibilité transversale, et les fréquences propres d'au moins trois modes de vibration du tube de mesure étant déterminées lors des mesures d'ajustement,
lequel procédé (200) comprend les étapes suivantes :

Réglage (205) d'un ensemble de conditions de mesure à partir d'une séquence d'ensembles différents de conditions de mesure, les conditions de mesure comprenant : une masse volumique du produit ($\rho_M$), et un ensemble de valeurs des paramètres auxquels le tube de mesure présente une sensibilité transversale ;
Excitation (210) d'au moins trois modes de vibration de l'au moins un tube de mesure du débitmètre massique ;
Détermination (220) des fréquences propres ($f_n$) des modes de vibration ;
Vérification (225) si la mesure a été effectuée pour un nombre suffisant d'ensembles de conditions de mesure ;
Répétition des étapes précédentes du procédé avec l'ensemble suivant de la séquence des différents ensembles de conditions de mesure, si le résultat de la vérification est négatif ; et
Calcul (230) des coefficients spécifiques au mode ($C_{0n}$, $C_{1n}$, $C_{2n}$, $C_{3n}$, $C_{4n}$) en cas de résultat positif de la vérification (225).

14. Débitmètre massique (2) comprenant :

au moins un tube de mesure apte à vibrer (A, B), destiné à guider un produit ;
au moins un corps de support (T), l'au moins un tube de mesure (A, B) étant couplé mécaniquement au tube de support (T) du côté entrée et côté sortie, afin de supprimer les mouvements relatifs entre une section d'extrémité côté entrée et une section d'extrémité côté sortie du tube de mesure ;
au moins un excitateur (8), par l'intermédiaire duquel l'au moins un tube de mesure (A, B) peut être excité pour produire des vibrations de flexion ;
au moins un capteur de vibrations (14, 16), lequel est destiné à mesurer les vibrations de flexion de l'au moins un tube de mesure (A, B) ;
et un circuit de fonctionnement et d'évaluation (18), lequel est destiné à alimenter l'excitateur (8) avec un courant d'excitation et à mesurer et évaluer les signaux de mesure de l'au moins un capteur de vibrations (14, 16) ;
le circuit de fonctionnement et d'évaluation (18) étant conçu pour mettre en œuvre le procédé selon l'une des revendications 1 à 12.

15. Débitmètre massique (2) selon la revendication 14, pour lequel le circuit de mesure et de fonctionnement est conçu pour recevoir au moins une valeur mesurée provenant d'au moins un paramètre pour lequel les vibrations du tube de mesure présentent des sensibilités transversales, l'au moins un paramètre étant sélectionné à partir d'une liste comprenant la pression du produit guidé dans le tube de mesure, une température du tube de mesure et une température du corps de support.

EP 4 323 747 B1

Fig. 1c

Fig. 1b

Fig. 1a

16

200

205 → 210 → 220 → 225 → 230

**Fig. 4**

100

110 → 120 → 130

**Fig. 3**

$a_{2,C}(\zeta)$

$a_n(\zeta)$

$a_{1,A}(\zeta)$

$a_3(\zeta)$

$m_e$

$\zeta$

z

l/2

$\zeta_M$

x

1,0

-1,0

$-\zeta_M$

-l/2

**Fig. 2**

17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015122661 A1
- DE 102020129999
- DE 102018101923 A1
- DE 102019124709
- WO 2012062551 A1
- DE 102020111127
- WO 2020239319 A
- DE 102020123999